# EUROPÄISCHE PATENTANMELDUNG

(11) **EP 1 298 893 A2**
(43) Veröffentlichungstag der Anmeldung: **02.04.2003**
(21) Anmeldenummer: 02102359.3
(22) Anmeldetag: 16.09.2002
(51) Int. Cl.: H04M 1/247, G06F 1/16

(54) **Mobilkommunikationsgerät mit einer Bildanzeigeeinrichtung**

(30) Priorität: 26.09.2001 DE 10147479
(71) Anmelder: SIEMENS AKTIENGESELLSCHAFT, 80333 München (DE)
(72) Erfinder: Bienek, Bernd, 46395 Bocholt (DE); Civeira Munoz, Carlos, 42105 Wuppertal (DE); Ehlert, Andre, 46414 Rhede (DE); Gröting, Wolfgang, 46149 Oberhausen (DE); Schroeder, Werner, Dr., 46399 Bocholt (DE); Wisniowski, Damian, 46395 Bocholt (DE)

(57) **Zusammenfassung**

Es wird ein frei tragbares funktechnisches Empfangs- bzw. Empfangs- und Sendegerät (1) mit einer Bildanzeigeeinrichtung (2) zum Anzeigen von Bildinhalten in einer Bildanzeige (3) vorgeschlagen, das einen erhöhten Anwendungskomfort hat und zudem neue Anwendungsmöglichkeiten erlaubt. Das vorliegende betreffende Gerät (1) weist hierzu Sensoren (4, 5, 6) auf, die bezüglich des vorliegenden betreffenden Geräts (1) Lageveränderungen im Raum ermitteln. In Abhängigkeit von den ermittelten Lageveränderungen wird durch eine von den angesprochenen Sensoren (4, 5, 6) abhängig arbeitende Steuerung (8) die Bildanzeigeeinrichtung (2) dazu veranlasst, in entsprechend angepasster Weise veränderte Bildinhalte in der zugehörigen Bildanzeige (3) zu erzeugen. Lageveränderungen können dabei in Bezug auf ein Drehen nach einer Himmelsrichtung, in Bezug auf ein Seitenneigen bzw. in Bezug auf ein Vor- und Zurückkippen des betreffenden Geräts (1) geschehen bzw. in Bezug auf eine Mischung daraus. Der Bildinhalt der Bildanzeige (3) bleibt dabei zum einen konstant nach einer Himmelsrichtung ausgerichtet bzw. verschiebt den Bildinhalt in die Richtung der Neigung bzw. Kippung. Es ist möglich, Schaltvorgänge mit solchen Lageveränderungen zu verbinden.

## Beschreibung

Die Erfindung betrifft ein frei tragbares funktechnisches Empfangs- bzw. Empfangs- und Sendegerät gemäß dem Oberbegriff des Anspruchs 1.

Anwendungen, die auf einem frei tragbaren funktechnischen Empfangs- bzw. Empfangs- und Sendegerät ablaufen, verlieren viel Komfort, weil sie nicht die Lage des Geräts im Raum feststellen und einen durch eine Bildanzeigeeinrichtung dargestellten Bildschirminhalt entsprechend korrigieren. Es gibt auch Anwendungen, die aus diesem Grunde überhaupt nicht ausgeführt werden können. In dieser Hinsicht sind vor allem Anwendungen aus dem Unterhaltungsbereich betroffen.

Bei einem Navigationssystem in einem Fahrzeug beispielsweise ist das Navigationssystem mit dem Fahrzeug verbunden und es erhält Informationen über die Fahrtrichtung des Fahrzeugs. Das Navigationssystem aktualisiert auf Grund dieser Informationen eine durch eine zum Navigationssystem gehörige Bildanzeigeeinrichtung bewerkstelligte Bildanzeige, einschließlich darin enthaltener Richtungsangaben. Demgegenüber fehlt mobilen Navigationssystemen eine solche Verbindung. Sie benötigen eine solche Verbindung nicht, weil sie das sogenannte GPS (Global Positioning System) nutzen.

Aufgabe der vorliegenden Erfindung ist es, ein frei tragbares funktechnisches Empfangs- bzw. Empfangs- und Sendegerät der eingangs genannten Art anzugeben, durch das ein erhöhter Anwendungskomfort gegeben ist und neue Anwendungen möglich sind.

Diese Aufgabe wird erfindungsgemäß durch ein frei tragbares funktechnisches Empfangs- bzw. Empfangs- und Sendegerät gelöst, das die kennzeichnenden Merkmale des Anspruchs 1 aufweist.

Vorteilhafte Ausgestaltungen der Erfindung sind Gegenstand von Unteransprüchen.

Die Aufgabe wird dadurch gelöst, dass in dem tragbaren funktechnischen Empfangs- bzw. Empfangs- und Sendegerät Sensoren vorgesehen sind, die Lageveränderungen im Raum beim vorliegenden betreffenden Gerät ermitteln. Bei der Bestimmung der Positionslage wird diese in Form von Messdaten als analoges und/oder digitales Signal ausgegeben. Dieses Signal wird einer Steuerung zugeführt, durch die eine in dem vorliegenden betreffenden Gerät vorhandene Bildanzeigeeinrichtung für die Anzeige von Bildinhalten in einer dazugehörigen Bildanzeige veranlasst wird, die Bildinhalte in der Bildanzeige in einer den Lageveränderungen des vorliegenden tragbaren funktechnischen Geräts entsprechend angepassten Weise zu verändern.

Die Umschreibung "Sensoren" ist dabei auch in der Weise zu verstehen, dass die Möglichkeit der Verwendung nur eines einzigen Sensors bestehen soll, der dann alle gewünschten Funktionen alleine bewerkstelligt.

Ein Vorteil eines solchen erfindungsgemäßen Geräts ist einmal, dass die Ausgabe von Bildinhalten wesentlich komfortabler erfolgt.

Werden beispielsweise Stadtpläne, Karten usw. auf ein solches technisches Gerät heruntergeladen, erfolgte die Kartenausrichtung bisher in der Weise, dass die Nord-Süd-Achse der dargestellten Karte mit der Oben-Unten-Achse des vorliegenden Geräts übereinstimmte. Stand der Benutzer nicht ausgerichtet nach Norden da, stimmte die Ausrichtung des dargestellten Kartenausschnitts nicht mit der Natur überein. Bei der Übertragung eines auf der Karte ausgedachten Weges auf die auf die Natur konnten dann Schwierigkeiten auftreten, weil es möglicherweise schwierig war, den Plan gedanklich entsprechend gedreht auf die Natur zu übertragen. Wurde andererseits das Gerät selbst gedreht bis der angezeigte Plan mit der Natur übereinstimmte, konnte es sein, dass die Straßennamen nicht mehr gut lesbar waren. Das erfindungsgemäße Gerät arbeitet hier wesentlich komfortabler, weil es eine Information über seine Lageausrichtung im Raum hat und dadurch in der Lage ist, abhängig von seiner momentanen Ausrichtung in Bezug auf eine Himmelsrichtung und in Bezug auf eine Grundausrichtung den Bildinhalt in der Bildanzeige in einer entsprechenden Weise zu korrigieren. Das erfindungsgemäße Gerät ist also in der Lage, eine adaptive Anpassung des Bildinhaltes in der Bildanzeige vorzunehmen. Beispielsweise wird der Bildinhalt in der Bildanzeige bei einem kontinuierlichen Verdrehen des vorliegenden betreffenden Geräts nach einer Himmelsrichtung jeweils entsprechend zurückgedreht dargestellt. Auf diese Weise hat ein Benutzer stets im vorliegenden Fall einen betreffenden Kartenausschnitt in der richtigen Ausrichtung gegenüber der Natur zur Verfügung. Die Übertragung beispielsweise eines ausgedachten Weges auf die Natur ist damit kein Problem mehr.

Sind in einer vorteilhaften Ausgestaltung der Erfindung beispielsweise die Straßennamen von einer dargestellten Karte zusätzlich entkoppelt und weiter mit der Lageausrichtung des betreffenden Geräts gekoppelt, könnten die Straßennamen trotz Lageveränderung des betreffenden Geräts in Bezug auf eine Himmelsrichtung stets in einer für den Benutzer des betreffenden Geräts leicht lesbaren Weise dargestellt werden, während die Karte bzw. der Plan selbst stets in einer mit der Ausrichtung der Natur übereinstimmenden Weise dargestellt wird.

Ein anderer Vorteil eines solchen erfindungsgemäßen Geräts ist, dass auch neue Anwendungen möglich sind.

Es können auf dem erfindungsgemäßen Gerät beispielsweise Spiele wie z. B. Autorennen gespielt werden, wobei das Gerät selbst das Lenkrad ist. Das Gerät korrigiert den Bildinhalt in der Bildanzeige abhängig von seiner Lage im Raum, so dass der Spielehorizont bei einem "Lenkradeinschlag" letztendlich nicht mitgedreht wird.

Das erfindungsgemäße Gerät erlaubt auch eine besonders komfortable Navigationshilfe für die Darstellung von solchen Seiten (z. B. Internet-Seiten, Straßen- und Landkarten, Pläne, Zeichnungen usw.), deren geometrische Ausmaße über die Fläche der Bildanzeige hinausgehen. Der Benutzer des Geräts muss lediglich das Gerät in die Richtung neigen, zu der er navigieren will. Die Stärke der Neigung kann zusätzlich herangezogen werden, um die Geschwindigkeit zu bestimmen, mit der die Anzeige über die Seite "fahren" soll. Ist der richtige Ausschnitt lokalisiert, so kann beispielsweise durch das Loslassen einer Navigationstaste der Vorgang angehalten (einfrieren des Bildausschnittes) bzw. durch erneutes Drücken ein neuer Navigationsvorgang eingeleitet werden.

Im Bereich der Unterhaltungs-Spiele können auch Spielfiguren realistischer und erlebnisreicher als bisher durch ihre Umwelt navigiert werden. Die Neigungs- bzw. Kipp-Sensoren erlauben nämlich nicht nur eine verfeinerte Richtungsbestimmung der Spielfigur (bis auf 0,1° genau), sondern die Stärke der Neigung bzw. Kippung kann genutzt werden, um ihr zusätzlich eine Geschwindigkeit bzw. Kraft zuzuordnen. Mit einem herkömmlichen 4-Tasten-Joypad konnte bisher eine Spielfigur innerhalb eines Zeitpunktes nur in eine der vier Himmelsrichtungen (Norden, Süden, Westen, Osten) navigiert werden. Für eine diagonale Bewegung der Spielfigur musste ein Anwender daher die Auf/Abwärtstaste und die Seitwärtstaste in abwechselnder Reihenfolge drücken, was letztlich zu einer "Zick-Zack"-Bewegung der Spielfigur führte.

Die Möglichkeit der Positionslagebestimmung des betreffenden Geräts kann weiter zum Navigieren im Menü des Geräts benutzt werden. Will der Anwender etwa eine Menü- bzw. Namensliste durchsuchen, so muss er das mobile Endgerät lediglich leicht nach vorne oder hinten kippen und schon durchlaufen sämtliche Menüpunkte bzw. Namen die Bildanzeige. Hat der Anwender den entsprechenden Eintrag gefunden, so kann er beispielsweise durch eine kurze Seitenneigung des Geräts zu einer untergeordneten Funktion und umgekehrt gelangen.

Eine weitere Möglichkeit der Anwendung des erfindungsgemäßen Geräts ist das Positionslage abhängige Führen des Mauszeigers innerhalb einer betreffenden Anwendung.

Weiter besteht die Möglichkeit, die Lage des Geräts als zusätzliches Entscheidungskriterium zum Einhalten einer Geheimhaltungsstufe (Confidence-Level) bei bildlich dargestellten Informationen mit auszuwerten. Dies ist vor dem Hintergrund von zukünftigen intelligenten und lernfähigen frei tragbaren funktechnischen Geräten zu sehen. Im ersten Schritt könnte zum Beispiel die automatische Deaktivierung der Bildanzeige realisiert sein, falls das frei tragbare funktechnische Gerät derart gehalten wird, dass im Normalfall keine Anzeige benötigt wird.

Auch in Zukunft werden die betreffenden Geräte um zahlreiche Applikationen erweitert werden, deren Bedienung bzw. Handhabung durch die Einführung der neuen Kommunikationsschnittstelle in vielen "Dingen" vereinfacht wird. Aber nicht nur die Vereinfachung der Bedienung ist von Vorteil, sondern gerade auch der "Joy of Use"-Aspekt, der für einen Anwender ein immer wichtigeres Auswahlkriterium ist.

Betreffende Geräte können beispielsweise Endgeräte für die funktechnische Kommunikation sein wie sie durch Mobiltelefone realisiert sind.

Kapazitive Neig- bzw. Kipp-Sensoren sind preisgünstige, aber trotzdem genaue und völlig verschleißfrei arbeitende Sensoren, die nach einem neuartigen Messverfahren arbeiten. Diese Neigungssensoren erfassen Neigungen zwischen +/- 30° in alle Richtungen (360°) bis auf 0,1° Genauigkeit. Durch den analogen oder digitalen Signalausgang ist die Weiterverarbeitung des Signals völlig unproblematisch. Neig- bzw. Kipp-Sensoren sind bereits in Miniaturausführung erhältlich und lassen sich daher auch in kleinste Endeinrichtungen integrieren.

Nachfolgend werden Ausführungsbeispiele der Erfindung anhand einer Zeichnung näher erläutert. Darin zeigen:
- Figur 1: ein Ausführungsbeispiel eines frei tragbaren funktechnischen Empfangs- bzw. Empfangs- und Sendegeräts gemäß der Erfindung,
- Figuren 2A und 2B: ein Gerät gemäß der Figur 1 in unterschiedlichen Lagepositionen in Bezug auf verschiedene Himmelsrichtungen,
- Figuren 3A und 3B: ein Gerät gemäß der Figur 1 in unterschiedlichen Lagepositionen in Bezug auf verschiedene Neigrichtungen, und
- Figuren 4A und 4B: ein Gerät gemäß der Figur 1 in unterschiedlichen Lagepositionen in Bezug auf verschiedene Kipprichtungen.

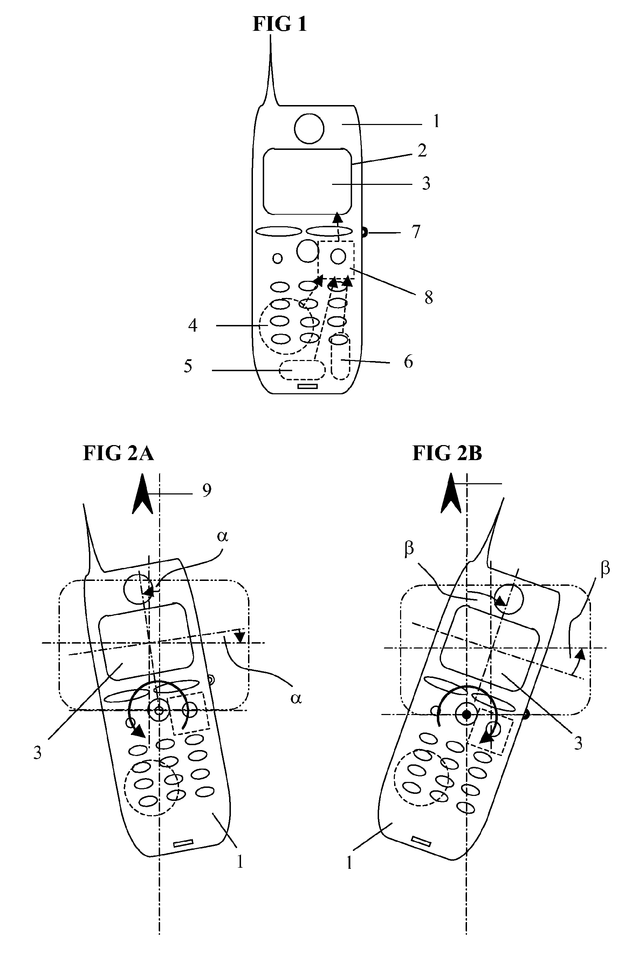

Das in der Figur 1 gezeigte frei tragbare funktechnische Empfangs- bzw. Empfangs- und Sendegerät 1 ist als Mobiltelefon realisiert. Es hat unter anderem eine Bildanzeigeeinrichtung 2 mit einer Bildanzeige 3. Die Bildanzeige 3 ermöglicht nach außen hin sichtbar die Anzeige von Bildinhalten, die entweder funktechnisch empfangen oder selbst generiert worden sind.

Das frei tragbare funktechnische Empfangs- bzw. Empfangs- und Sendegerät 1 gemäß der Figur 1 weist ferner verschiedenartige bzw. gemäß ihrer auszuführenden Funktionen verschiedene Sensoren 4, 5 und 6 auf. Die Sensoren 4, 5, 6 dienen zur Ermittlung der Lageposition im Raum ausgehend von einer festgelegten Neutralstellung. Als Neutralstellung kann in Bezug auf eine Himmelsrichtung die Ausrichtung nach Norden definiert sein. In Bezug auf eine Seitenneigung kann eine Seitenneigung von 0 Grad definiert sein. Bezüglich eines Kippens um eine Querachse des Geräts 1 kann eine 45 Grad-Anstellung als Neutralstellung definiert sein.

Zum Ermitteln der Lageveränderung aus der Neutralstellung des vorliegenden betreffenden Geräts 1 heraus weist das vorliegende betreffende Gerät 1 als einen ersten Teil der verschiedenartigen bzw. verschiedenen Sensoren 4, 5 und 6 Sensoren 4 auf, mit denen die Lageveränderung in Bezug auf die Himmelsrichtung ermittelt werden kann. Als einen zweiten Teil der verschiedenartigen bzw. verschiedenen Sensoren 4, 5 und 6 weist das vorliegende betreffende Gerät 1 Sensoren 5 auf, mit denen die Lageveränderung in Bezug auf das seitliche Neigen nach links bzw. rechts ermittelt werden kann. Schließlich weist das vorliegende betreffende Gerät 1 als einen dritten Teil der verschiedenartigen bzw. verschiedenen Sensoren 4, 5 und 6 Sensoren 6 auf, mit denen die Lageveränderung in Bezug auf das Kippen um eine Querachse des betreffenden Geräts 1 ermittelt werden kann.

An dieser Stelle sei angemerkt, das nicht jeweils alle Typen von Sensoren gleichzeitig in dem vorliegenden betreffenden Gerät 1 vorhanden sein müssen. Je nach den dem vorliegenden betreffenden Gerät 1 zugedachten Funktionalitäten kann das vorliegende betreffende Gerät 1 beispielsweise nur mit den zum ersten Teil gehörenden Sensoren 4 oder beispielsweise nur mit den zu den zweiten und/oder dritten Teilen gehörenden Sensoren 5 und 6 ausgerüstet sein.

Gemäß der Figur 1 weist das Gerät 1 eine Schaltereinrichtung 7 auf, mit der das Anpassung der Anzeige von Bildinhalten in der Bildanzeige 3 in Abhängigkeit von Lageveränderungen des vorliegenden betreffenden Geräts 1 wirksam oder nicht wirksam geschaltet werden kann.

Die verschiedenartigen bzw. verschiedenen Sensoren 4, 5 und 6 sind mit einer Steuerung 8 verbunden. Die Steuerung 8 ist weiter mit der Bildanzeigeeinrichtung 2 verbunden.

Die Steuerung 8 arbeitet in Abhängigkeit von den durch die verschiedenartigen bzw. verschiedenen Sensoren 4, 5 und 6 ermittelten Lageveränderungen des vorliegenden betreffenden Geräts 1. Je nach Lageveränderungen des vorliegenden betreffenden Geräts 1 generieren die verschiedenartigen bzw. verschiedenen Sensoren 4, 5 und 6 jeweils entsprechende Steuersignale in digitaler und/oder analoger Form, die von der Steuerung 8 verarbeitet werden. Die Steuerung 8 veranlasst dann in Abhängigkeit dieser Steuersignale die Bildanzeigeeinrichtung 2 zur Darstellung entsprechend veränderter Bildinhalte in der Bildanzeige 3.

In welcher Form die Bildinhalte der Bildanzeige 3 durch die Bildanzeigeeinrichtung 2 verändert werden zeigen die Figuren 2A bis 4B.

In den Figuren 2A und 2B ist ausgehend von einer Nord-Süd-Richtung, die durch eine Kompassrose (9) angezeigt ist, das frei tragbare funktechnische Gerät 1 gemäß der Figur 1 um einen Winkel α in eine nord-westliche Himmelsrichtung (Figur 2A) bzw. um einen Winkel β in eine nord-östliche Himmelsrichtung gedreht (Figur 2B). Der Bildinhalt der Bildanzeige 3 ist dabei jeweils um einen entsprechenden gleichen Winkel α bzw. β zurückgedreht, so dass letztlich der Bildinhalt der Bildanzeige 3 konstant in der Nord-Süd-Richtung ausgerichtet bleibt.

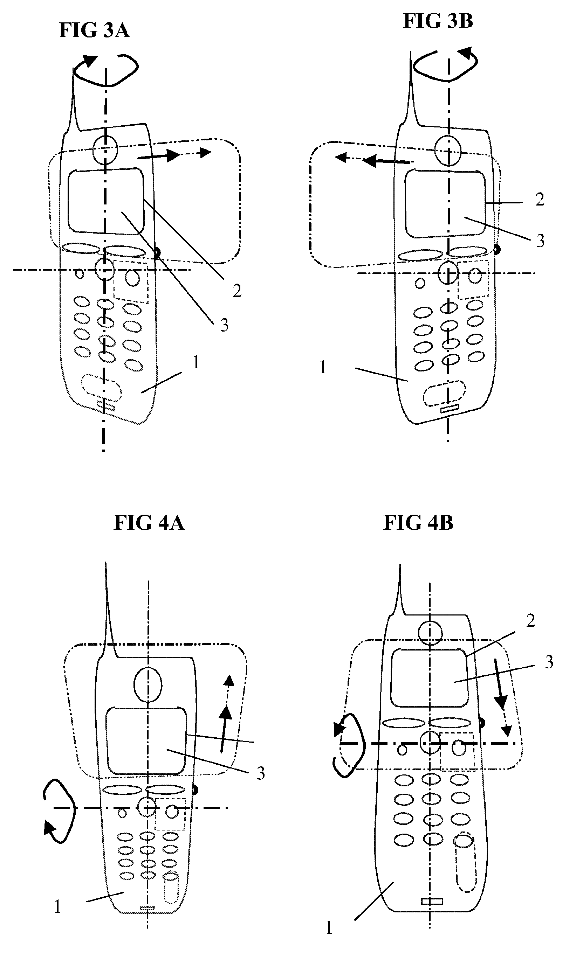

In den Figuren 3A und 3B ist das frei tragbare funktechnische Gerät (1) nach links (Figur 3A) bzw. rechts (Figur 3B) zur Seite geneigt. Die Bildanzeige 3 der Bildanzeigeeinrichtung 2 zeigt dabei jeweils einen Ausschnitt eines größeren Bildinhaltes, der in der Bildanzeige 3 der Bildanzeigeeinrichtung 2 jedoch nicht in vollem Umfang dargestellt werden kann. Bei einer Seitenneigung nach links bzw. rechts wird der durch die Bildanzeige 3 dargestellte Bildausschnitt in die Richtung der jeweiligen Seitenneigung verschoben. Die Geschwindigkeit des Verschiebens des Bildausschnittes hängt dabei vom Grad der Seitenneigung ab.

In den Figuren 4A und 4B ist das frei tragbare funktechnische Gerät (1) nach oben (Figur 4A) bzw. unten (Figur 4B) um eine Querachse gekippt. Die Bildanzeige 3 der Bildanzeigeeinrichtung 2 zeigt dabei wieder jeweils nur einen Ausschnitt eines größeren Bildbereichs, der in der Bildanzeige 3 der Bildanzeigeeinrichtung 2 wieder nicht in vollem Umfang dargestellt werden kann. Bei einem Kippen oben um die Querachse bzw. unten um die Querachse wird der durch die Bildanzeige 3 dargestellte Bildausschnitt in die Richtung verschoben, in die das Kippen stattgefunden hat. Die Geschwindigkeit des Verschiebens des Bildausschnittes hängt dabei wieder vom Grad des Kippens ab.

Es ist möglich, mit dem Grad des Kippens bzw. Neigens eine Schalterfunktion zu verbinden. Beispielsweise könnte bei einem zu starken Neigen bzw. Kippen die Bildanzeige abgeschaltet werden. Ein Grund dafür könnte sein, dass von einem Nachbarplatz aus die Bildanzeige nicht eingesehen werden können soll Eine Schaltfunktion könnte auch ausgelöst werden, wenn nur kurzzeitig in eine Richtung ein Neigen bzw. Kippen stattfindet

Insgesamt gilt, dass zu einem einzigen Zeitpunkt nicht ausschließlich ein Drehen, Neigen oder Kippen stattfinden muss, sondern dass auch Mischungen passieren können.

## Patentansprüche

1. Frei tragbares funktechnisches Empfangs- bzw. Empfangsund Sendegerät mit einer Bildanzeigeeinrichtung zum Anzeigen von Bildinhalten in einer dazugehörigen Bildanzeige, **dadurch gekennzeichnet, dass** Sensoren (4, 5, 6) vorgesehen sind, die Lageveränderungen beim vorliegenden frei tragbaren funktechnischen Gerät (1) ermitteln, und dass eine von den ermittelten Lageveränderungen des frei tragbaren funktechnischen Geräts (1) abhängig arbeitende Steuerung (8) vorgesehen ist, die die Bildanzeigeeinrichtung (2) veranlasst, die Bildinhalte der Bildanzeige (3) in einer den Lageveränderungen des vorliegenden frei tragbaren funktechnischen Geräts (1) entsprechenden angepassten Weise zu verändern.

2. Frei tragbares funktechnisches Gerät nach Anspruch 1, **dadurch gekennzeichnet, dass** die Sensoren (4, 5, 6) einen ersten Teil bildende Sensoren (4) umfassen, die empfindlich sind in Bezug auf die Ausrichtung nach einer Himmelsrichtung und die das Ausmaß einer Lageveränderung des vorliegenden frei tragbaren funktechnischen Geräts (1) in Bezug auf die Ausrichtung nach einer Himmelsrichtung ausgehend von einer zugehörigen Ausgangslage in einer technisch weiter verarbeitbaren Art anzeigen, und dass die durch die Bildanzeigeeinrichtung (2) bewirkte angepasste Veränderung der Anzeige von Bildinhalten als ein entsprechendes Zurückdrehen wenigstens von Teilen der angezeigten Bildinhalte realisiert ist.

3. Frei tragbares funktechnisches Gerät nach Anspruch 2, **dadurch gekennzeichnet, dass** die Sensoren (4) Kompasselemente umfassen.

4. Frei tragbares funktechnisches Gerät nach einem der vorherigen Ansprüche, **dadurch gekennzeichnet, dass** die Sensoren (4, 5, 6) einen zweiten bzw. dritten Teil bildende Neig- bzw. Kipp-Sensoren (5 bzw. 6) umfassen, durch die beim vorliegenden frei tragbaren funktechnischen Gerät (1) Lageveränderungen in Bezug auf ein Neigen bzw. Kippen ermittelt und ein ermitteltes Neigen bzw. Kippen in einer technisch weiter verarbeitbaren Art angezeigt sind.

5. Frei tragbares funktechnisches Gerät nach Anspruch 4, **dadurch gekennzeichnet, dass** ein ermitteltes Neigen bzw. Kippen in einer solchen technisch weiter verarbeitbaren Art angezeigt ist, dass dieser Anzeige eine Information über den Grad des Kippens bzw. Neigens zumindest technisch entnehmbar ist.

6. Frei tragbares funktechnisches Gerät nach Anspruch 4 oder 5, **dadurch gekennzeichnet, dass** die durch die Bildanzeigeeinrichtung (2) bewerkstelligte angepasste Veränderung von Bildinhalten in der Bildanzeige (3) als ein Verschieben der Anzeige des betreffenden Bildinhalts in Richtung des Kippens bzw. Neigens des vorliegenden frei tragbaren funktechnischen Geräts (1) hin realisiert ist.

7. Frei tragbares funktechnisches Gerät nach Anspruch 6, **dadurch gekennzeichnet, dass** eine mit dem Verschieben der Bildanzeige (3) von Bildinhalten in Zusammenhang stehende Verschiebegeschwindigkeit vom Grad des Kippens bzw. Neigens des frei tragbaren funktechnischen Geräts (1) abhängig gemacht ist.

8. Frei tragbares funktechnisches Gerät nach einem der Ansprüche 4 bis 7, **dadurch gekennzeichnet, dass** abhängig vom alleinigen oder gemeinsamen Auftreten eines Kippens bzw. Neigens bzw. abhängig vom alleinigen oder gemeinsamen Auftreten eines Kippens bzw. Neigens jeweils über ein vorgegebenes Maß hinaus Schaltvorgänge im vorliegenden frei tragbaren funktechnischen Gerät (1) ausgelöst sind.

9. Frei tragbares funktechnisches Gerät nach Anspruch 8, **dadurch gekennzeichnet, dass** nach einem Neigen bzw. Kippen des vorliegenden frei tragbaren funktechnischen Geräts (1) über ein vorgegebenes Maß hinaus ein Schaltvorgang ausgelöst ist, durch den zumindest die Bildanzeige (3) der Bildanzeigeeinrichtung (2) abgeschaltet ist.

10. Frei tragbares funktechnische Gerät nach einem der vorherigen Ansprüche, **dadurch gekennzeichnet, dass** eine Schaltereinrichtung (7) vorgesehen ist für ein Wirksamschalten der Anpassung von Bildinhalten in der Bildanzeige (3).

11. Frei tragbares funktechnisches Gerät nach einem der vorherigen Ansprüche, **dadurch gekennzeichnet, dass** das frei tragbare funktechnische Gerät (1) als Mobiltelefon ausgebildet ist.
